(19) Europäisches Patentamt
European Patent Office
Office européen des brevets

(11) EP 2 653 367 A2

(12) **EUROPEAN PATENT APPLICATION**

(43) Date of publication:
**23.10.2013 Bulletin 2013/43**

(51) Int Cl.:
***B62D 15/02*** *(2006.01)*

(21) Application number: **13162686.3**

(22) Date of filing: **08.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.04.2012 JP 2012095549**

(71) Applicant: **Toyota Jidosha Kabushiki Kaisha**
**Toyota-shi, Aichi 471-8571 (JP)**

(72) Inventors:
- **Ishijima, Hironobu**
**Toyota-shi,, Aichi 471-8571 (JP)**
- **Satonaka, Hisashi**
**Toyota-shi,, Aichi 471-8571 (JP)**
- **Yoshikawa, Tatsuya**
**Toyota-shi,, Aichi 471-8571 (JP)**
- **Hata, Keisuke**
**Toyota-shi,, Aichi 471-8571 (JP)**

(74) Representative: **Winter, Brandl, Fürniss, Hübner, Röss, Kaiser, Polte - Partnerschaft**
**Bavariaring 10**
**80336 München (DE)**

(54) **Parking aid device, parking aid method, program, and storage medium storing the program**

(57) A parking aid device includes a radar device (20A, 20B) that outputs position information on reflecting points on an object present around the vehicle; setting means (64) for setting a parking target position for a position of the vehicle using the position information on reflecting points; guiding means (68) for guiding the vehicle to the parking target position; object recognition means (62) for extracting a group of reflecting points, determined as reflected from the same object, from the position information on reflecting points and stores position information on the group of reflecting points in storage means (72); and correction means (70) for correcting a distance between the position of the vehicle and the parking target position based on a comparison between a first shape extracted by the object recognition means (62) during vehicle guiding and a second shape extracted by the object recognition means (62) in the past.

FIG. 10

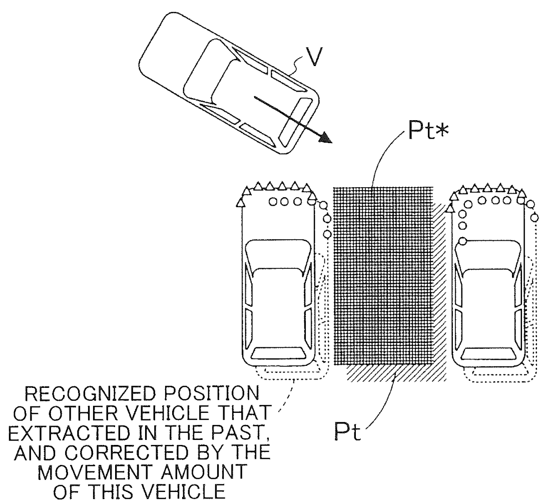


EP 2 653 367 A2

## Description

BACKGROUND OF THE INVENTION

1. Field of the Invention

The present invention relates to a parking aid device, a parking aid method, a program, and a storage medium storing the program for aiding in parking a vehicle using the output of a radar device.

2. Description of Related Art

Conventionally, technologies for aiding in parking a vehicle are in practical use. The technologies include automatic steering control, automatic driving control, or the output of voice or display that gives driving guidance on steering angles.

For example, Japanese Patent Application Publication No. 2010-195118 discloses a technology for guiding a vehicle to a parking target position while automatically controlling vehicle steering. The publication describes a parking aid device that changes the upper-limit vehicle speed according to the steering angle of a moving vehicle when guiding the vehicle to a parking target position..

Japanese Patent Application Publication No. 2007-210612 discloses a parking aid device that analyzes a camera-imaged image and sets a parking target position. This device recognizes the image of feature points in a real image, memorizes the relative relation between a parking target position and the feature points, estimates the vehicle position for which parking aid control is performed and, based on the estimation result and the recognition result of feature points for which parking aid control is performed, automatically corrects the target trajectory so that the relative relation, stored in the storage means, can be maintained during the execution of parking aid control.

In the technology for aiding a vehicle in parking, the position of the vehicle, for which parking aid control is performed, is estimated based only on the information obtained from the vehicle speed sensor or the steering sensor. Therefore, when the vehicle moves under parking aid control, the problem is that there is a difference between the device-recognized relative relation, which refers to the relation between the vehicle position and the parking target position, and the actual relative relation due to a delay in the wheel.

To address this problem, the device described in Japanese Patent Application Publication No. 2010-195118 sets the upper-limit vehicle speed to a lower value as the vehicle's steering angle or steering deviation is larger, thereby reducing the amount of difference that will be generated. However, because simply reducing the speed does not completely prevent the generation of the difference, a vehicle cannot sometimes be guided accurately to a parking target position.

The device described in Japanese Patent Application Publication No. 2007-210612 searches a real image for feature points that mainly appear on a white line. This means that, if a white line is not drawn in the parking target position, the target trajectory cannot sometimes be corrected accurately. A white line, if covered by another parking vehicle, cannot be fully recognized and, in such a case, the target trajectory cannot sometimes be corrected accurately. In general, it is difficult to calculate the correct position of an object other than a white line using the imaging image recognition function of a camera. This is because the feature points are less likely to appear clearly and in sufficient density on the outer shape of an object.

SUMMARY OF THE INVENTION

The present invention provides a parking aid device, a parking aid method, and a parking aid program capable of guiding a vehicle to a parking target position more accurately.

A first aspect of the invention provides a parking aid device that includes a radar device that outputs position information on reflecting points on an object present around the vehicle; setting means for setting a parking target position for a position of the vehicle using the position information on reflecting points; guiding means for guiding the vehicle to the parking target position; an object recognition means that extracts a group of reflecting points, determined as reflected from the same object, from the position information on reflecting points and stores position information on the group of reflecting points in storage means); and correction means for correcting a distance between the position of the vehicle and the parking target position based on a comparison between a first shape and a second shape, the first shape represented by a group of reflecting points extracted by the object recognition means when the guiding means guides the vehicle, the second shape represented by a group of reflecting points extracted by the object recognition means in the past.

In the first aspect described above, the parking aid device may further include a movement amount calculation means that calculates a movement amount of the vehicle, **characterized in that**, during the comparison between the first shape and the second shape, the correction means may calculate a transition amount between assumed position information on a group of reflecting points and position information on a group of reflecting points extracted by the object recognition means by comparing the first shape and the second shape and then correct the distance between the position of the vehicle and the parking target position using the transition amount, the assumed position information on a group of reflecting points obtained by adding a movement amount to position information on a group of reflecting points extracted by the object recognition means in the past, the movement amount being an amount of movement of the vehicle from a time at which the position information on a group of reflecting points was extracted.

In the first aspect described above, the correction means may perform processing, in which a first reflecting point, which is one reflecting point selected from reflecting points representing the first shape, and a second reflecting point, which is one reflecting point selected from reflecting points representing the second shape, are made to coincide through parallel movement, an optimum rotation angle is searched for with the coincided reflecting points as the center, and a degree of coincidence between the first shape and the second shape is calculated, repeatedly while changing the reflecting points to be selected and, based on a parallel movement amount and a rotation angle corresponding to the highest degree of coincidence, calculate the transition amount.

In the first aspect described above, the radar device may be a laser radar device installed on a side part of the vehicle.

In the first aspect described above, the correction means may correct the distance between the vehicle and the parking target position by changing information on the parking target position.

In the first aspect described above, the correction means may correct the distance between the vehicle and the parking target position by changing information on the position of the vehicle.

A second aspect of the invention provides a parking aid method, for use by a parking aid device that is mounted in a vehicle and that includes a radar device for outputting position information on reflecting points on an object present around the vehicle, that includes setting a parking target position for the vehicle using the position information on reflecting points; extracting a group of reflecting points, determined as reflected from the same object, from the position information on reflecting points and storing the group of reflecting points in storage means; and correcting a distance between the vehicle and the parking target position based on a comparison between a first shape and a second shape when guiding the vehicle to the parking target position, the first shape represented by a group of the extracted reflecting points, the second shape represented by a group of reflecting points extracted in the past.

A third aspect of the invention provides a program for causing a parking aid device that is mounted in a vehicle and that includes a radar device for outputting position information on reflecting points on an object present around the vehicle to execute a parking aid method. The parking aid method includes setting a parking target position for the vehicle using the position information on reflecting points, extracting a group of reflecting points, determined as reflected from the same object, from the position information on reflecting points and storing the group of reflecting points in storage means , and correcting a distance between the vehicle and the parking target position based on a comparison between a first shape and a second shape when guiding the vehicle to the parking target position, the first shape represented by a group of the extracted reflecting points, the second shape represented by a group of reflecting points extracted in the past.

A fourth aspect of the invention provides a non-transitory computer-readable storage medium storing a program for causing a parking aid device that is mounted in a vehicle and that includes a radar device for outputting position information on reflecting points on an object present around the vehicle to execute a parking aid method. The parking aid method includes setting a parking target position for the vehicle using the position information on reflecting points, extracting a group of reflecting points, determined as reflected from the same object, from the position information on reflecting points and storing the group of reflecting points in storage means, and correcting a distance between the vehicle and the parking target position based on a comparison between a first shape and a second shape when guiding the vehicle to the parking target position, the first shape represented by a group of the extracted reflecting points, the second shape represented by a group of reflecting points extracted in the past.

According to the aspects described above, a vehicle can be guided to a parking target position more accurately.

## BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a diagram showing an example of the system configuration of a parking aid device in an embodiment of the present invention;

FIG. 2 is a diagram showing the internal configuration of a laser radar device of the present invention;

FIG. 3 is a diagram showing a 3D object detection area of the laser radar device;

FIG. 4 is a plan view showing the installation positions of the laser radar devices and object detection areas viewed from top of a vehicle;

FIG. 5 is a diagram showing how the surrounding objects relatively move as the vehicle moves on a two-dimensional map;

FIG. 6 is a diagram showing how a parking target position is set based on a group of reflecting points recognized by the object recognition means;

FIG. 7 is a diagram showing how a parking target position is set based on a group of reflecting points recognized by the object recognition means;

FIG. 8 is a diagram showing an example of a trajectory along which the vehicle moves according to guiding processing performed by guiding means;

FIG. 9 is a diagram showing how reference reflecting point groups are extracted in an initial area $\alpha$ determined with the parking target position as the reference.

FIG. 10 is a diagram showing the transition of the positions of the groups of reflecting points during vehicle guiding by the guiding means;

FIG. 11 is a diagram showing an assumed position (indicated by circle symbols) of a reference reflecting point group obtained by adding the movement amount of the vehicle to the reference reflecting point group and a group of reflecting points (indicated by triangle symbols) extracted when vehicle guiding has progressed;

FIG. 12 is a diagram showing how correction means moves reflecting point group B in parallel to make reflecting points a1 and b1 coincide;

FIG. 13 is a diagram showing how the correction means rotates reflecting point group B around reflecting point b1;

FIG. 14 is a diagram showing a state in which the parallel movement amount and the rotation angle are determined; and

FIG. 15 is a diagram showing an example of a flowchart showing the processing flow performed by the parking aid device of the present invention.

## DETAILED DESCRIPTION OF EMBODIMENTS

The mode for carrying out the present invention is described below using an embodiment with reference to the drawings.

FIG. 1 is a diagram showing an example of the system configuration of a parking aid device 1 in the embodiment of the present invention. The parking aid device 1 mainly includes a main switch 10, laser radar devices 20A and 20B, a vehicle speed sensor 30, a steering angle sensor 32, an engine electronic control unit (ECU) 40, a steering ECU 50, and a parking aid ECU 60.

The main switch 10 is installed in a position where the driver can operate it, for example, around the instrument panel or the steering wheel of the vehicle. The main switch 10 may be a software switch on the navigation display screen. The main switch 10 is usually in the no-signal output state (or off-signal output state) and, when the driver starts operation, outputs the on signal to the parking aid ECU 60.

The laser radar devices 20A and 20B, installed for example, around the right and left door mirrors, detect the position of an object present in the right and left directions of the vehicle. FIG. 2 is a diagram showing the internal configuration of the laser radar devices 20A and 20B. FIG. 3 is a diagram showing a 3D object detection area of the laser radar device 20. In FIG. 2, FIG. 3, and the description related to these figures, the laser radar devices 20A and 20B are denoted simply as the laser radar device 20. The laser radar device 20 may be installed only on the left side or right side of the vehicle.

As shown in FIG. 2, the laser radar device 20 includes a power supply 21, a visible light laser input/output unit 22, a fixed mirror 23, a high-speed MEMS mirror 24, and a low-speed MEMS mirror 25. The laser radar device 20 drives the high-speed MEMS mirror 24 and the low-speed MEMS mirror 25 to cause laser, which is output from the visible light laser input/output unit 22, to scan an object in a predetermined area. By doing so, the laser radar device 20 can detect the positions of reflecting points in the predetermined area.

As shown in FIG. 3, for example, the laser radar device 20 has a resolution of 60 dots in the range of 60-degree detection angle in the vertical direction and a resolution of 370 dots in the range of 190-degree detection angle in the horizontal direction. The detectable distance of the laser radar device 20 ranges from 0.1 m to 20 m, and the laser radar device 20 can measure the distance to an object with the accuracy of 10 cm or shorter. A radar device other than a laser radar device, which ensures a sufficient resolution and detection range, may also be used.

FIG. 4 is a plan view showing the installation positions of the laser radar devices 20A and 20B and the object detection areas viewed from top of the vehicle V. As shown in FIG. 4, the laser radar device 20A has a detection area 21 A including the forward and backward areas on the left hand side of the vehicle V. Similarly, the laser radar device 20B has a detection area 21B including the forward and backward areas on the right hand side of the vehicle V.

The laser radar devices 20A and 20B send (output) the detection result (position information about reflecting points) to the parking aid ECU 60. In this case, when represented by the polar coordinates (distance r and direction θ) with the position of the laser radar device 20A or 20B as the base, the position information on reflecting points, output by the laser radar devices 20A and 20B, is converted to the information in the two-dimensional, rectangular coordinates by the parking aid ECU 60. For example, the position information is converted to the information in the rectangular coordinates in the two-dimensional plane viewed from top of the vehicle V with a predetermined position and traveling direction of the vehicle V as the base.

The vehicle speed sensor 30 generates the vehicle speed signal and outputs it to the parking aid ECU 60. For example, the vehicle speed sensor 30 is composed of wheel speed sensors, mounted on each the wheels of the vehicle V, and the skid control computer. The skid control computer generates the vehicle speed rectangular pulse signal (vehicle speed signal), based on the wheel speed pulse signal output by the wheel speed sensor, and outputs the generated signal to the parking aid ECU 60.

The steering angle sensor 32 outputs the steering angle information to the parking aid ECU 60. For example, the steering angle sensor 32, installed inside the steering column, detects the rotation angle (steering angle) of the steering wheel, interlocked with the rotation angle of the rolling wheels, and outputs the steering angle information to the parking aid ECU 60.

Each of the ECUs 40, 50, and 60 is a microcomputer that includes a central processing unit (CPU), a read only memory (ROM), and a random access memory (RAM) interconnected with each other via a bus with the CPU as the center. In addition to the above configuration, each of the engine ECUs 40, 50, and 60 may further include storage devices, such as a hard disk drive (HDD), a digital versatile disk recordable (DVD-R) drive, a compact disc-recordable (CD-R) drive, and an electronically erasable and programmable read only memory (EEPROM), an I/O port, a timer, and a counter.

The engine ECU 40 controls an engine 42 and a transmission 44 according to the accelerator pedal operation or shift lever operation by a driver. At the same time, when the parking aid ECU 60 performs parking aid control, the engine ECU 40 controls the engine 42 and the transmission 44 according to an instruction from the parking aid ECU 60. For example, when the parking aid ECU 60 performs parking aid control, the engine ECU 40 controls the engine 42 and the transmission 44 so that the vehicle V is moved in the forward direction or backward direction by the creep torque.

The steering ECU 50 controls an assist motor 52 of the steering device according to the steering wheel operation by a driver. At the same time, when the parking aid ECU 60 performs parking aid control, the steering ECU 50 drives the assist motor 52 and changes the steering angle of the vehicle V according to an instruction from the parking aid ECU 60.

The parking aid ECU 60 is started when an on signal from the main switch 10 is detected. After the parking aid ECU 60 is started, the CPU executes the program, stored in the storage device in the parking aid ECU 60, to perform parking aid control described below. As shown in FIG. 1, the parking aid ECU 60 includes the following functional blocks for performing parking aid control: object recognition means 62, setting means 64, movement amount calculation means 66, guiding means 68, and correction means 70. As described above, the parking aid ECU 60 includes a RAM 72.

The object recognition means62 extracts position information on a group of reflecting points on the same object, one set of position information for each group of reflecting points, from the output of the laser radar devices 20A and 20B, and stores the extracted position information in the RAM 72. The position information on a group of reflecting points mentioned here is position information on a group of a plurality of reflecting points which are arranged at regular intervals, one next to the other, and the whole size of which is equal to or larger than a predetermined size. Extracting the position information in this way makes it possible to determine that the position information on a plurality of discrete reflecting points (position information on a group of reflecting points) is reflected from an object that is present continuously (that is, the same object). By doing so, a group of reflecting points on a parking vehicle or a wall is extracted. Note that the object recognition means 62 may be provided as a function of the laser radar devices 20A and 20B.

The RAM 72 stores the following information: position information on a group of reflecting points determined by the object recognition means 62 as reflecting points from the same object, position information on reflecting points on which the movement amount calculated by the movement amount calculation means 66, which will be described later, is reflected, and trajectory used to guide a vehicle to a target parking position. The coordinates of the position information are set as the coordinates on a virtual two-dimensional map (two-dimensional rectangular coordinates) where a predetermined position on the vehicle V is the origin (any position on the vehicle V, for example, center of gravity, leading edge, trailing edge, installation position of laser radar devices 20A and 20B) and the moving direction of the vehicle V is the base (i.e. x-axis or y-axis on the rectangular coordinate system). Because the origin is the vehicle V, this two-dimensional map is a coordinate system map relative to the vehicle V. That is, when the vehicle V moves, the position information on the reflecting points is corrected as if the surrounding objects relatively moved. FIG. 5 is a diagram showing how the surrounding objects relatively move on the two-dimensional map as the vehicle V moves. In FIG. 5, the circle symbol indicates a reflecting point.

The movement amount calculation means 66 calculates the movement amount of the vehicle V and corrects the position information on the reflecting points recorded in the RAM 72. For example, the movement amount calculation means 66 calculates the movement amount of the vehicle V based on the traveling distance, which is obtained by integrating or counting the output of the vehicle speed sensor 30, and the output of the steering angle sensor 32 and then reflects the calculated movement amount on the position information on the reflecting points. The object recognition means 62, setting means 64, and correction means 70 perform processing using the position information on the reflecting points corrected by the movement amount calculation means 66.

The setting means 64 sets a parking target position Pt using the output of the laser radar devices 20A and 20B. For example, when a parking area is recognized by detecting a white line on the road surface using the output of the laser radar devices 20A and 20B (a white line reflects a laser beam to an identifiable degree), the setting means 64 sets the recognized parking area as the parking target position Pt. For example, when two sets of a group of reflecting points, recognized by the object recognition means 62, are present with an interval wider than a predetermined width between them, the setting means 64 sets the parking target position Pt in that interval.

FIG. 6 and FIG. 7 are diagrams showing how a parking target position is set based on the groups of reflecting points recognized by the object recognition means 62. The setting means 64 determines whether the interval between the two sets of a group of reflecting points corresponds to a space for one vehicle (predetermined interval or larger) or a space for two vehicles (two or more times larger than the predetermined interval). If the interval between the two sets of a group of reflecting points corresponds to a space for one vehicle as shown in FIG. 6, the setting means 64 sets the parking target position Pt approximately in the center of the space. On the other hand, if the interval between the two sets of a group of reflecting points corresponds to a space for two or more vehicles as shown in FIG. 7, the setting means 64 divides the space into two or more and sets the parking target position Pt in the space nearer to the vehicle V. Linear reflecting points can be extracted by the Hough transform or the leas squares method.

With the stop position of the vehicle V as the guiding start position, the guiding means 68 instructs the engine ECU 40 and the steering ECU 50 to first move forward to a predetermined backward movement start position St and then to move backward and stop at the parking target position Pt. FIG. 8 is a diagram showing an example of a trajectory along which the vehicle V moves according to the guiding processing performed by the guiding means 68. The guiding means 68 calculates a target trajectory in advance and stores the target steering angles at the points on the trajectory, which are set at a predetermined interval of distance, in the RAM 72. After that, the guiding means 68 calculates the traveling distance of the vehicle V after the guiding processing is started by integrating or counting the output of the vehicle speed sensor 30. Based on the calculated traveling distance, the guiding means 68 instructs the steering ECU 50 to guide the vehicle each time the vehicle travels the predetermined distance so that the output of the steering angle sensor 32 matches the target steering angle.

As described above, the vehicle V moves as a result of vehicle guiding by the guiding means 68, and the position information on the reflecting points of the surrounding objects is corrected by the movement amount calculation means 66. However, because there is a difference between the actual steering angle of the vehicle V and the output of the steering angle sensor 32 due to the distortion of the tires, it is difficult for the movement amount calculation means 66 to accurately correct the two-dimensional map. As a result, it is assumed that the parking target position Pt in the two-dimensional map will transit (or shift) from the correct position as the vehicle V moves. The correction means 70 corrects a transition in the parking target position Pt, which will be generated as the vehicle V moves, using the position information on a group of reflecting points recognized by the object recognition means 62.

First, from the groups of reflecting points recognized by the object recognition means 62 until the vehicle V stopped at the start position, the correction means 70 extracts the reflecting points, which are included an area three meters extending from the right and left edges of the parking target position and one meter extending into the forward side in the longitudinal direction of the parking target position, as a reference reflecting point group. The numeric values, such as three meters and one meter, are examples only. FIG. 9 is a diagram showing how the reference reflecting point groups are extracted in the initial area $\alpha$ determined with the parking target position as the reference.

The correction means 70 calculates the positional difference (parallel movement amount and rotation angle) between the reference reflecting point group, corrected by the movement amount calculation means 66 on the two-dimensional map according to the progress of vehicle guiding by the guiding means 68, and the group of reflecting points recognized last by the object recognition means 62, as the transition amount of the parking target position Pt. FIG. 10 is a diagram showing the transition of the positions of the groups of reflecting points during vehicle guiding by the guiding means 68. In FIG. 10, the circle symbols indicate the reference reflecting point group extracted before and after the vehicle V stops at the start position and corrected by the movement amount calculation means 66 according to the movement of the vehicle V, and the triangle symbols indicate the group of reflecting points extracted by the object recognition means 62 after vehicle guiding by the guiding means 68 has progressed. Pt* indicates the parking target position corresponding to the group of reflecting points indicated by the triangular symbols, that is, the actual parking target position that is to replace the initially-set parking target position Pt (corrected by the movement amount calculation means 66).

It should be noted that there is no one-to-one correspondence between the group of reflecting points indicated by the circle symbols and the group of reflecting points indicated by the triangle symbols. This means that the transition amount cannot be calculated immediately after data on the both groups of reflecting points is acquired. Therefore, for both groups of reflecting points, the correction means 70 calculates the transition amount of the positions of the group of reflecting points by detecting a part where the shapes are partially similar.

The following describes the transition amount calculation method used by the correction means 70. FIG. 11 to FIG. 14 are diagrams showing the transition amount calculation method used by the correction means 70.

FIG. 11 is a diagram showing the following two: one is the assumed position (indicated by circle symbols) of the reference reflecting point group obtained by adding the movement amount of the vehicle V to the reference reflecting point group and the other is the group of reflecting points (indicated by triangle symbols) extracted when vehicle guiding has progressed. The correction means 70 generates, in advance, an array of the reflecting points, indicated by the circle symbols, as reflecting point group A = {a1, a2, a3, ..., an} in which the elements are arranged in the order of shorter distance from the parking target position Pt. Similarly, the correction means 70 generates an array of the reflecting points, indicated by the triangle symbols, as reflecting point group B = {b1, b2, b3, ..., bm} in which the elements are arranged in the order of shorter distance from the parking target position Pt.

Next, the correction means 70 moves reflecting point group B in parallel so that reflecting point a1 and reflecting point b1 coincide. FIG. 12 is a diagram showing this movement. In this state, the correction means 70 calculates the distance between each two nearest reflecting points between the reflecting point groups and calculates the total value DT. Expression (1) is an example of an expression for calculating the total value DT. In expression (1), the combination of reflecting points, between which the distance is calculated, depends on the positional relation of the reflecting points. The method for finding a partial match in shape is not limited to this method but various methods may be used.

$$DT = |b2 - a2| + |b3 - a4| + \dots |bm - an2| \dots (1)$$

Next, the correction means 70 rotates reflecting point group B around reflecting point b1 in increments of predetermined degrees (FIG. 13) . The correction means 70 calculates the total value DT each time reflecting point group B is rotated. The range, in which reflecting point group B is rotated, and the incremental degrees may be defined freely.

Next, the correction means 70 moves reflecting point group B in parallel so that a2 and b1 coincide. The correction means 70 calculates the total value DT and, in addition, rotates reflecting point group B around reflecting point b1 in increments of predetermined degrees and, for each rotation, calculates the total value DT.

The correction means 70 repeats this processing until reflecting point b1 and reflecting point an coincide.

After that, the correction means 70 calculates the parallel movement amount and the rotation angle, which correspond to the minimum total value of those calculated in all the processing steps, as the transition amount of the group of reflecting points. That the total value DT, calculated using expression (1), is the minimum means that the distance between the corresponding points is the minimum, that is, the shape of the reflecting point groups partially match. FIG. 14 is a diagram showing the state in which the parallel movement amount and the rotation angle are determined.

When the parallel movement amount and the rotation angle are determined, the correction means 70 uses the determined parallel movement amount and the rotation angle for the initially-set parking target position Pt to calculate the parking target position Pt* through parallel movement and rotation. That is, the actual parking target position Pt* is calculated from the initially-set parking target position. As a result, the parking aid device 1 guides the vehicle V to the parking target position Pt*, thus providing more accurate parking aid.

The following describes the flow of processing performed by the parking aid device 1. FIG. 15 shows an example of a flowchart showing the processing flow performed by the parking aid device 1 of the present invention. The processing of this flowchart is started when the parking aid ECU 60 detects an on signal sent from the main switch 10.

The parking aid ECU 60 causes the laser radar devices 20A and 20B to operate (S100). Next, the object recognition means 62 extracts position information on a group of reflecting points that are determined as the same object and stores the extracted position information in the RAM 72 (S102). The parking aid ECU 60 determines whether the vehicle V has stopped (S104). Next, tf it is determined that the vehicle V has not yet stopped, the parking aid ECU 60 performs the processing in S102 again (No in S104).

If it is determined that the vehicle V has stopped (Yes in S104), the setting means 64 sets a parking target position and, using the speaker or the display, gives the driver a guidance message indicating that the parking aid device 1 is ready to guide the vehicle V (S 106).

After that, the guiding means 68 starts guiding the vehicle V (S108). From the time the guiding means 68 starts guiding the vehicle V to the time the vehicle V reaches the parking target position, the object recognition means 62 repeats, at a periodic interval, the processing for extracting the positions of a group of reflecting points determined as those reflected from the same object.

Next, the movement amount calculation means 66 acquires the movement amount of the vehicle V based on the output of the vehicle speed sensor 30 and the steering angle sensor 32 and corrects the position information on the corresponding reflecting points (S110) . Next, the correction means 70 calculates the transition amount by comparing the position information on the group of reflecting points, extracted by the object recognition means 62 at a periodic interval, with the assumed position information generated by adding the amount of movement of the vehicle V to the position information on the group of reflecting points extracted in the past (S112) . Next, the correction means 70 corrects the parking target position based on the transition amount (S114) . Next, the correction means 70 determines whether the vehicle V has reached the parking target position (S116) . If the vehicle V has reached the parking target position (Yes in S116), the correction means 70 terminates the processing. Conversely, if the vehicle V has not yet reached the parking target position (No in S116), the correction means 70 passes control back to S110 to continue the control.

According to the parking aid device of the present invention described above, a parking target position can be calculated correctly. As a result, the parking aid device 1 of the present invention can guide the vehicle V to the parking target position more correctly.

While the best mode for carrying out the present invention has been described with reference to an embodiment, the present invention is not limited only to this embodiment but various modifications and replacements may be added.

For example, though the processing is performed in the embodiment described above using a relative-coordinate map in which, as the vehicle V moves, the coordinates are changed as if the surrounding objects moved with the vehicle V as the base, the present invention is not limited to this processing. Instead of using a relative-coordinate map, the processing may also be performed using an absolute-coordinate map in which still objects do not move. In this case, instead of correcting a parking target position by the correction means 70, the position of the vehicle V is corrected. More specifically, the position information (coordinates) on the vehicle V on an absolute-coordinate map is updated based on the output of the vehicle speed sensor 30 and the steering angle sensor 32. After that, based on a match in shape between the group of reflecting points stored in the absolute-coordinate map in the past and the group of reflecting points extracted at that time, the position of the vehicle V in the absolute-coordinate map is corrected. The other control is the same as that of the technology used in the embodiment. That is, based on a comparison between a first shape, represented by a group of reflecting points extracted by the object recognition means 62, and a second shape represented by a group of reflecting points extracted by the object recognition means 62 in the past, the distance between the position of the vehicle and the position of the parking target position is corrected.

## Claims

1. A parking aid device mounted in a vehicle, **characterized by** comprising:

    a radar device (20A, 20B) that outputs position information on reflecting points on an object present around the vehicle;
    setting means (64) for setting a parking target position for a position of the vehicle using the position information on reflecting points;
    guiding means (68) for guiding the vehicle to the parking target position;
    object recognition means (62) for extracting a group of reflecting points, determined as reflected from the same object, from the position information on reflecting points and stores position information on the group of reflecting points in storage means (72); and
    correction means (70) for correcting a distance between the position of the vehicle and the parking target position based on a comparison between a first shape and a second shape, the first shape represented by a group of reflecting points extracted by the object recognition means (62) when the guiding means (68) guides the vehicle, the second shape represented by a group of reflecting points extracted by the object recognition means (62) in the past.

2. The parking aid device according to claim 1, further comprising movement amount calculation means (66) for calculating a movement amount of the vehicle, **characterized in that**
   the correction unit (70) calculates a transition amount between assumed position information on a group of reflecting points and position information on a group of reflecting points extracted by the object recognition means (62) by comparing the first shape and the second shape and then corrects the distance between the position of the vehicle and the parking target position using the transition amount, the assumed position information on a group of reflecting points obtained by adding a movement amount to position information on a group of reflecting points extracted by the object recognition means (62) in the past, the movement amount being an amount of movement of the vehicle from a time at which the position information on a group of reflecting points was extracted.

3. The parking aid device according to claim 2, **characterized in that**

the correction means (70) performs processing, in which a first reflecting point, which is one reflecting point selected from reflecting points representing the first shape, and a second reflecting point, which is one reflecting point selected from reflecting points representing the second shape, are made to coincide through parallel movement, an optimum rotation angle is searched for with the coincided reflecting points as the center, and a degree of coincidence between the first shape and the second shape is calculated, repeatedly while changing the reflecting points to be selected and, based on a parallel movement amount and a rotation angle corresponding to the highest degree of coincidence, calculates the transition amount.

**4.** The parking aid device according to any one of claims 1 to 3, **characterized in that** the radar device is a laser radar device installed on a side part of the vehicle.

**5.** The parking aid device according to any one of claims 1 to 4, **characterized in that** the correction means (70) corrects the distance between the vehicle and the parking target position by changing information on the parking target position.

**6.** The parking aid device according to any one of claims 1 to 4, **characterized in that** the correction means (70) corrects the distance between the vehicle and the parking target position by changing information on the position of the vehicle.

**7.** A parking aid method for use by a parking aid device that is mounted in a vehicle and that includes a radar device (20A, 20B) for outputting position information on reflecting points on an object present around the vehicle, the parking aid method **characterized by** comprising :

setting a parking target position for the vehicle using the position information on reflecting points;
extracting a group of reflecting points, determined as reflected from the same object, from the position information on reflecting points and storing the group of reflecting points in storage means (72); and
correcting a distance between the vehicle and the parking target position based on a comparison between a first shape and a second shape when guiding the vehicle to the parking target position, the first shape represented by a group of the extracted reflecting points, the second shape represented by a group of reflecting points extracted in the past.

**8.** A program for causing a parking aid device that is mounted in a vehicle and that includes a radar device (20A, 20B) for outputting position information on reflecting points on an object present around the vehicle to execute a parking aid method, the parking aid method **characterized by** comprising:

setting a parking target position for the vehicle using the position information on reflecting points;
extracting a group of reflecting points, determined as reflected from the same object, from the position information on reflecting points and storing the group of reflecting points in storage means (72); and
correcting a distance between the vehicle and the parking target position based on a comparison between a first shape and a second shape when guiding the vehicle to the parking target position, the first shape represented by a group of the extracted reflecting points, the second shape represented by a group of reflecting points extracted in the past.

**9.** A non-transitory computer-readable storage medium storing a program for causing a parking aid device that is mounted in a vehicle and that includes a radar device (20A, 20B) for outputting position information on reflecting points on an object present around the vehicle to execute a parking aid method, the parking aid method **characterized by** comprising:

setting a parking target position for the vehicle using the position information on reflecting points;
extracting a group of reflecting points, determined as reflected from the same object, from the position information on reflecting points and storing the group of reflecting points in storage means (72); and
correcting a distance between the vehicle and the parking target position based on a comparison between a first shape and a second shape when guiding the vehicle to the parking target position, the first shape represented by a group of the extracted reflecting points, the second shape represented by a group of reflecting points extracted in the past.

FIG. 1

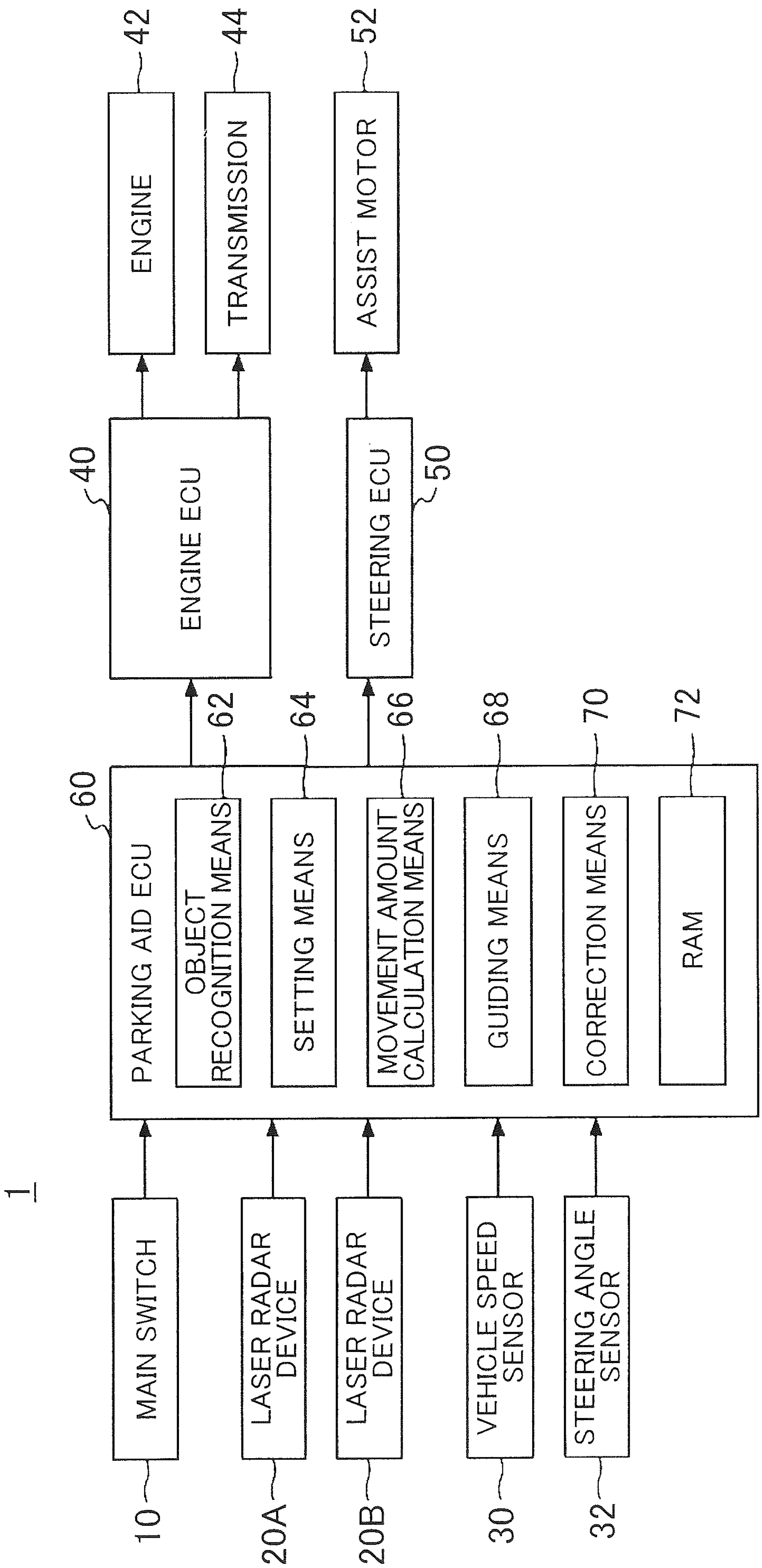
1
MAIN SWITCH
10
LASER RADAR DEVICE
20A
LASER RADAR DEVICE
20B
VEHICLE SPEED SENSOR
30
STEERING ANGLE SENSOR
32
PARKING AID ECU
60
OBJECT RECOGNITION MEANS
62
SETTING MEANS
64
MOVEMENT AMOUNT CALCULATION MEANS
66
GUIDING MEANS
68
CORRECTION MEANS
70
RAM
72
ENGINE ECU
40
STEERING ECU
50
ENGINE
42
TRANSMISSION
44
ASSIST MOTOR
52

FIG. 2

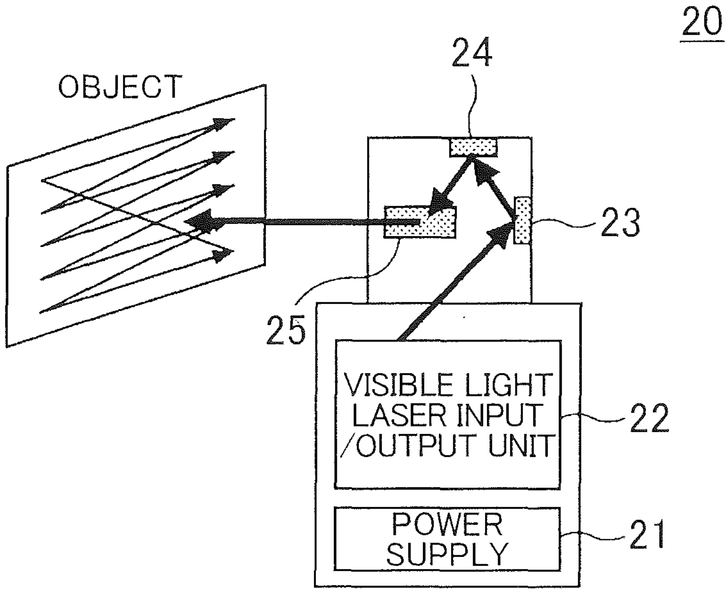
20
24
OBJECT
23
25
VISIBLE LIGHT LASER INPUT /OUTPUT UNIT
22
POWER SUPPLY
21

FIG. 3

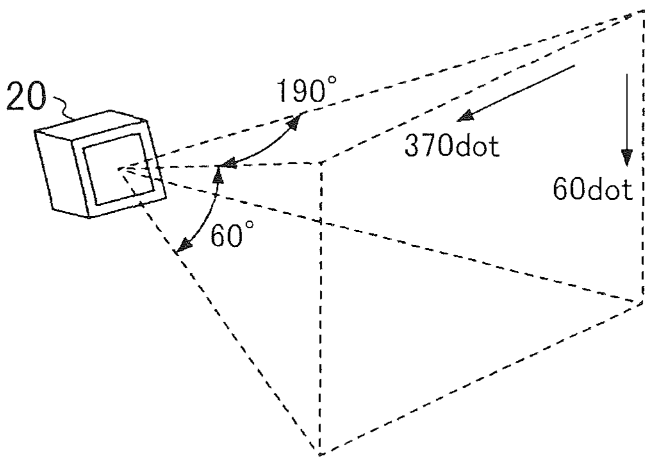
20
190°
370dot
60dot
60°

FIG. 4

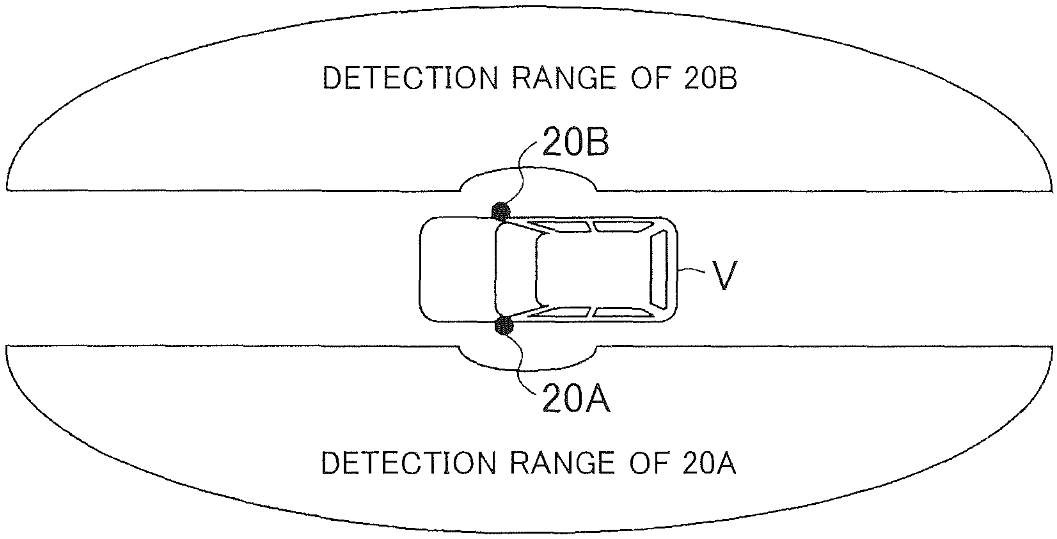

FIG. 5

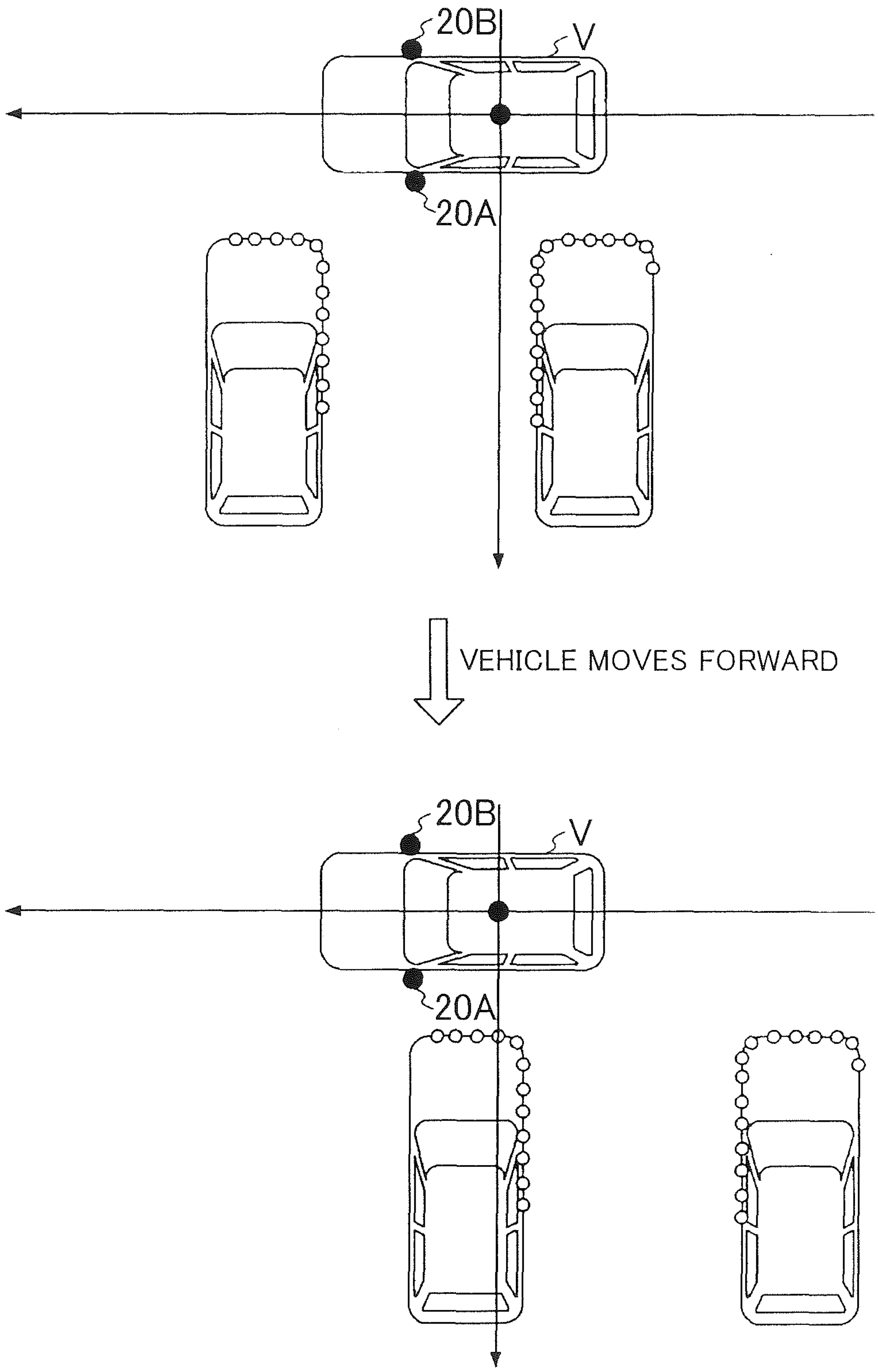

FIG. 6

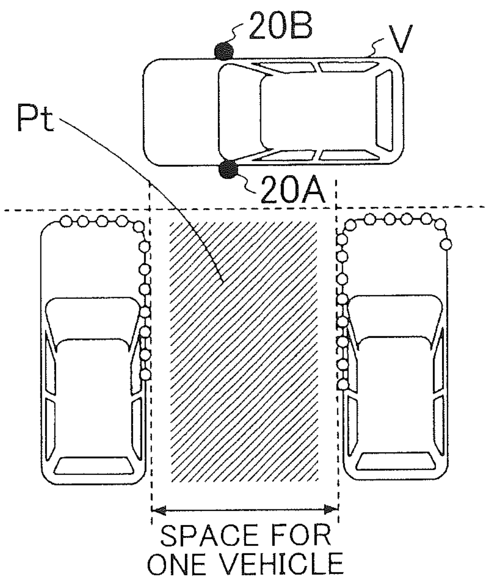
20B
V
Pt
20A
SPACE FOR
ONE VEHICLE

FIG. 7

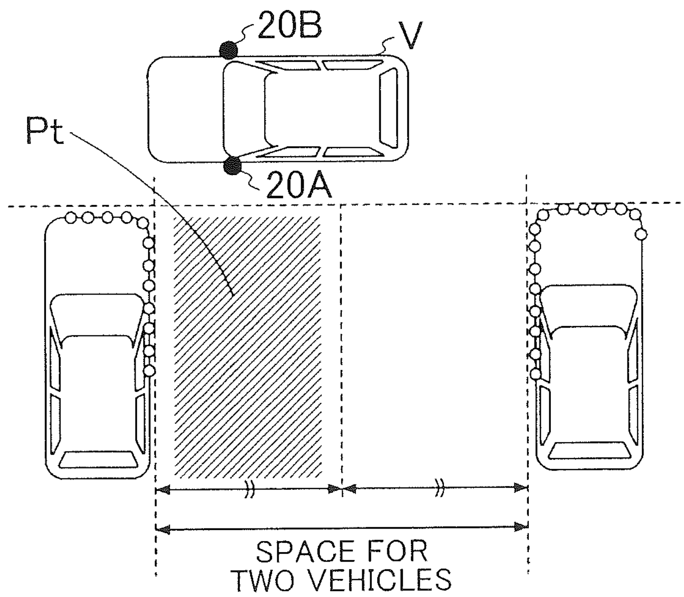
20B
V
Pt
20A
SPACE FOR
TWO VEHICLES

FIG. 8

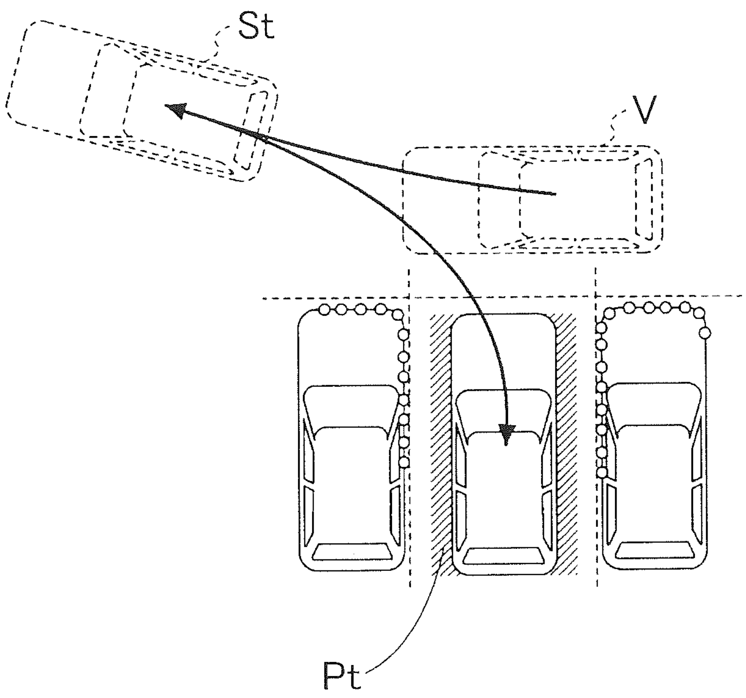


FIG. 9

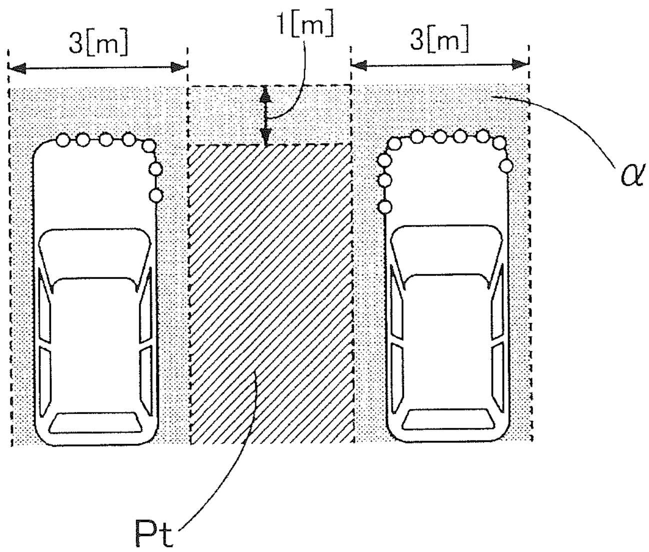

F I G . 10

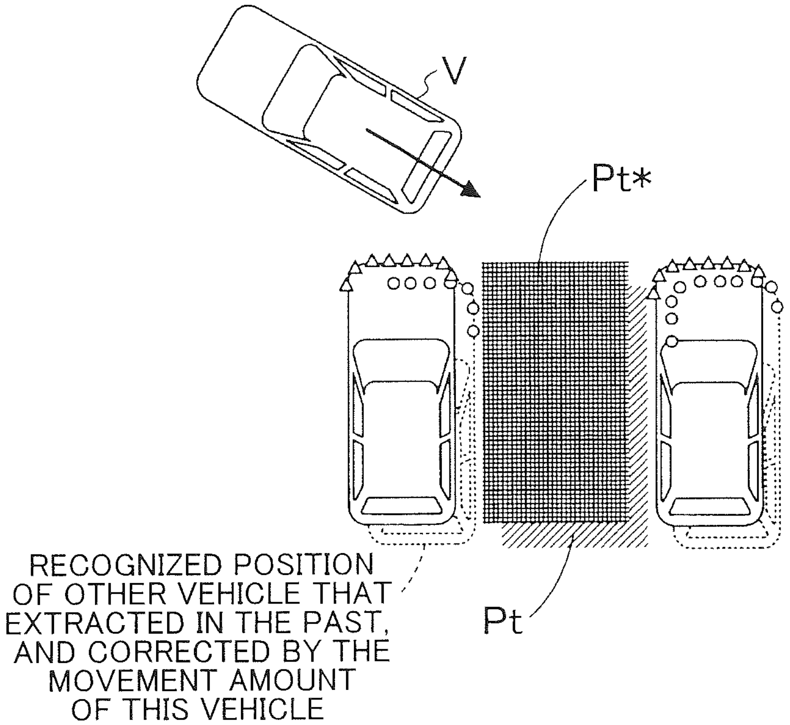
V
Pt*
RECOGNIZED POSITION
OF OTHER VEHICLE THAT
EXTRACTED IN THE PAST,
AND CORRECTED BY THE
MOVEMENT AMOUNT
OF THIS VEHICLE
Pt

F I G . 11

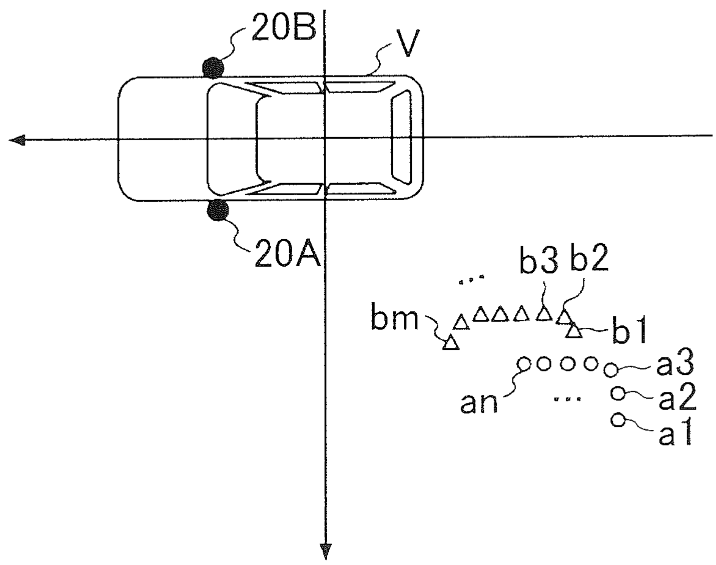
20B
V
20A
b3 b2
bm
b1
a3
an
a2
a1

FIG. 12

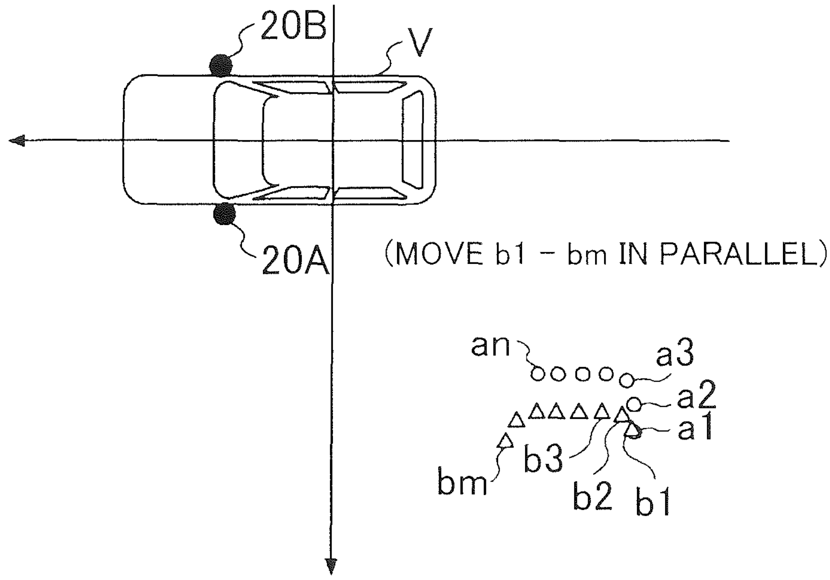
20B
V
20A
(MOVE b1 - bm IN PARALLEL)
an
a3
a2
a1
bm
b3
b2
b1

FIG. 13

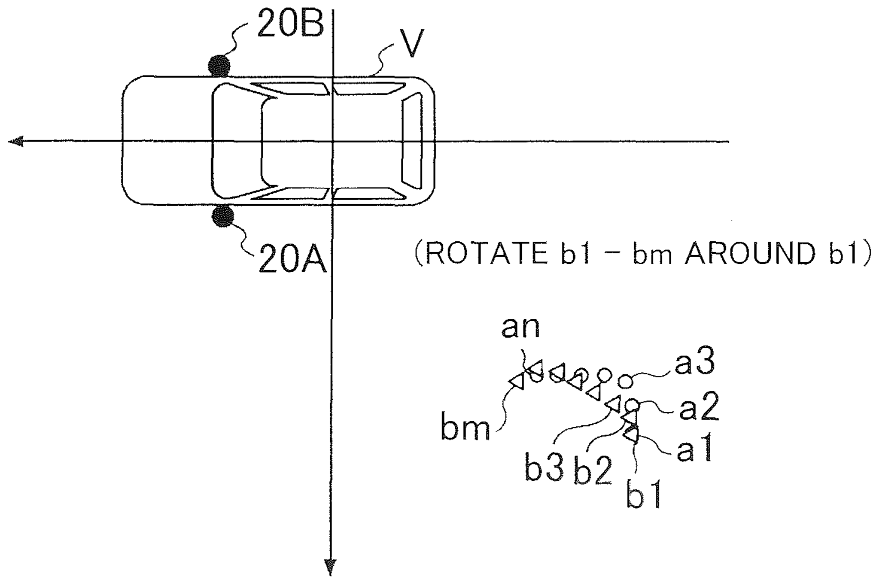
20B
V
20A
(ROTATE b1 - bm AROUND b1)
an
a3
a2
a1
bm
b3
b2
b1

FIG. 14

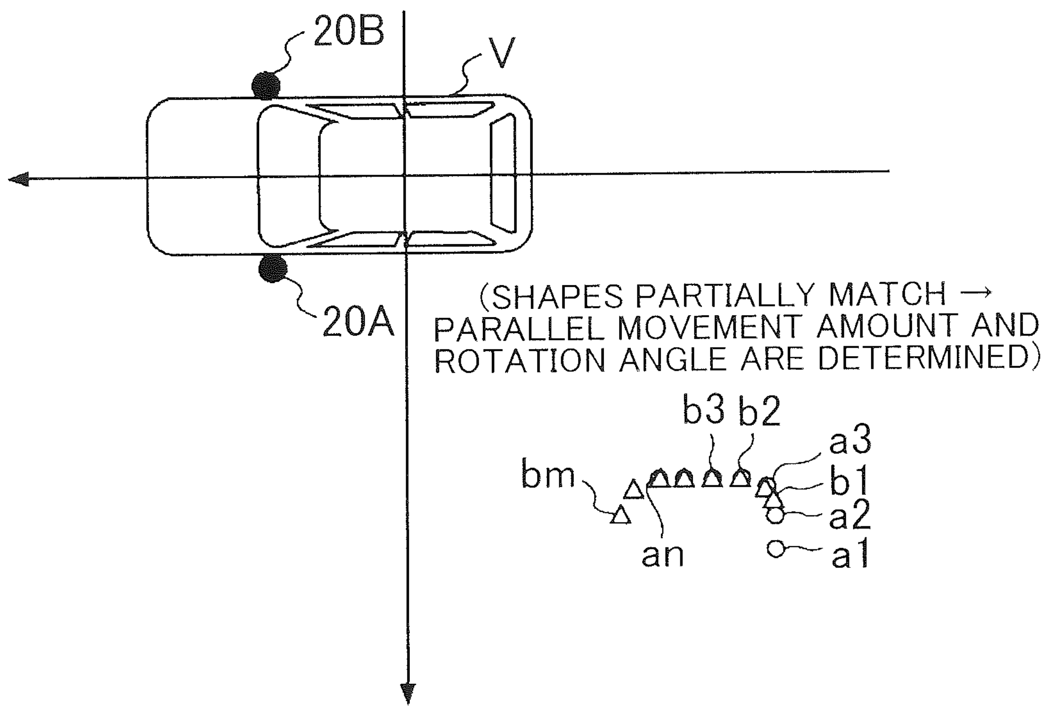
20B
V
20A
(SHAPES PARTIALLY MATCH →
PARALLEL MOVEMENT AMOUNT AND
ROTATION ANGLE ARE DETERMINED)
b3 b2
a3
bm
b1
a2
an
a1

FIG. 15

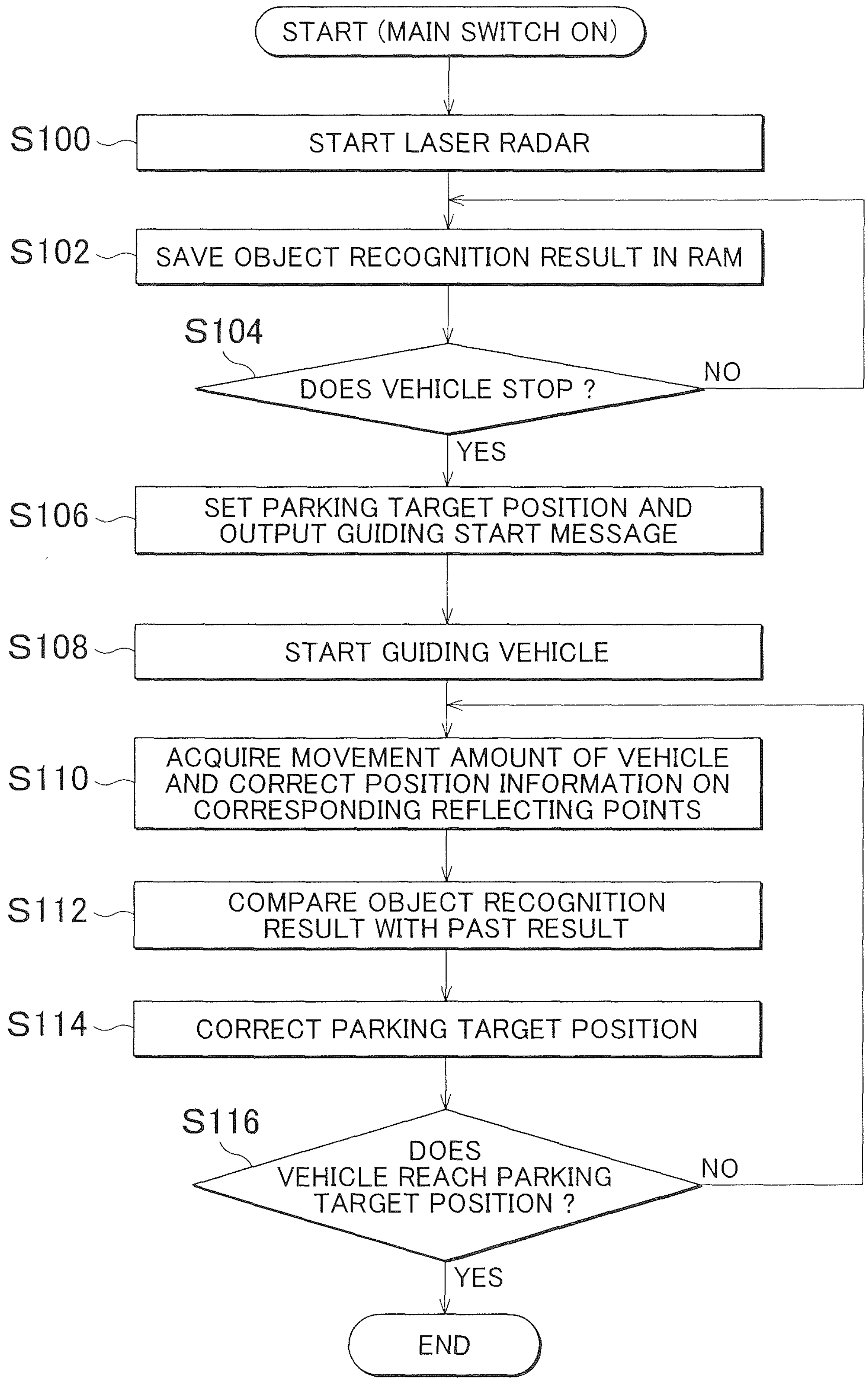
START (MAIN SWITCH ON)
S100
START LASER RADAR
S102
SAVE OBJECT RECOGNITION RESULT IN RAM
S104
DOES VEHICLE STOP ?
NO
YES
S106
SET PARKING TARGET POSITION AND OUTPUT GUIDING START MESSAGE
S108
START GUIDING VEHICLE
S110
ACQUIRE MOVEMENT AMOUNT OF VEHICLE AND CORRECT POSITION INFORMATION ON CORRESPONDING REFLECTING POINTS
S112
COMPARE OBJECT RECOGNITION RESULT WITH PAST RESULT
S114
CORRECT PARKING TARGET POSITION
S116
DOES VEHICLE REACH PARKING TARGET POSITION ?
NO
YES
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010195118 A
- JP 2007210612 A